# EUROPÄISCHE PATENTSCHRIFT

(11) **EP 0 890 797 B1**
(45) Veröffentlichungstag und Bekanntmachung des Hinweises auf die Patenterteilung: **21.05.2003**
(21) Anmeldenummer: 98112111.4
(22) Anmeldetag: 01.07.1998
(51) Int. Cl.: F24D 3/16

(54) **Klimatisierungselement und Verfahren zu seiner Herstellung**
Element for air conditioning and method of manufacturing
Elément pour le conditionnement d'air et méthode de fabrication

(30) Priorität: 07.07.1997 DE 29711839 U
(43) Veröffentlichungstag der Anmeldung: 13.01.1999
(73) Patentinhaber: VAW Metawell GmbH metal sandwich technology, 86633 Neuburg/Donau (DE)
(72) Erfinder: Rothe, Frank, 86633 Neuburg (DE)
(74) Vertreter: Cohausz & Florack

(56) Entgegenhaltungen:
- DE-A- 3 203 728
- FR-A- 2 341 103
- US-A- 4 168 740

## Beschreibung

Die Erfindung betrifft ein Klimatisierungselement mit Kanälen, durch die gasförmige oder flüssige Medien zum Kühlen oder Heizen geleitet werden.

Bisher werden Klimatisierungselemente aus Baugruppen hergestellt, die aus mindestens zwei Einzelkomponenten bestehen, nämlich einer Trägerplatte, z.B. einem Sandwichmaterial, Massivblechen oder Gipskarton, und mindestens einem zusätzlichen Element für die Medienführung, wie z.B. Rohrschlangen, gesickte Bleche oder dergleichen.

Derartige Klimatisierungselemente haben den Nachteil, daß ihre Wärmeabstrahlung nicht gleichmäßig ist, da erst eine Wärmeübertragung aus den medienführenden Kanälen bzw. Rohren in die einzelnen Wärmetauscherplatten erfolgen muß.

Ferner weisen die bekannten Klimatisierungselemente eine relativ große Bauhöhe auf, da medienführende Kanäle und Wärmetauscherelemente als Baugruppen getrennt voneinander angeordnet sind. Hierdurch entstehen auch Isolationsverluste, da oftmals ein Luftspalt oder andere isolierend wirkende Materialien zwischen dem wärmeübertragenden Medium und dem wärmeabgebenden Konstruktionselement angeordnet sind.

Aufgabe der vorliegenden Erfindung ist es daher, ein Klimatisierungselement der eingangs genannten Art derart zu verbessern, daß die Wärmeabstrahlung bezogen auf die zur Verfügung stehende Gesamtfläche vergrößert wird, die Isolationsverluste verringert werden, die Bauhöhe auf ein für die statische Festigkeit erforderliches Mindestmaß herabgesetzt und der energetische Gesamtwirkungsgrad durch niedrige Vorlauftemperaturen verbessert werden kann.

Diese Aufgabe wird erfindungsgemäß durch ein voll integriertes Klimatisierungselement gemäß den in den Schutzansprüchen angegebenen Merkmalen gelöst.

Es hat sich gezeigt, daß durch die Verwendung eines dünnen Metalldeckbleches zwischen Medium und der zu kühlenden oder zu heizenden Umgebung die Isolationsverluste auf ein Minimum reduziert werden können. Dies führt zu niedrigen Vorlauftemperaturen, die sich nur geringfügig von den einzustellenden Solltemperaturen des zu klimatisierenden Raumes unterscheiden.

Im Vergleich zu bisher verwendeten zwei-komponentigen Wärmeoder Kältestrahlern weist das erfindungsgemäße voll integrierte Klimatisierungselement eine vergleichsweise geringe Bauhöhe auf. Bis auf einen relativ schmalen Randbereich kann die gesamte Fläche für die Klimatisierung genutzt werden. Der wirtschaftliche Nutzen ist daher im Verhältnis zum eingesetzten Material optimal.

Im folgenden wird die Erfindung anhand eines Ausführungsbeispieles näher erläutert. Es zeigen:
- Fig. 1: Gesamtansicht des erfindungsgemäßen Klimatisierungselementes in Draufsicht;
- Fig. 2: Teilansicht des erfindungsgemäßen Klimatisierungselementes im Querschnitt.

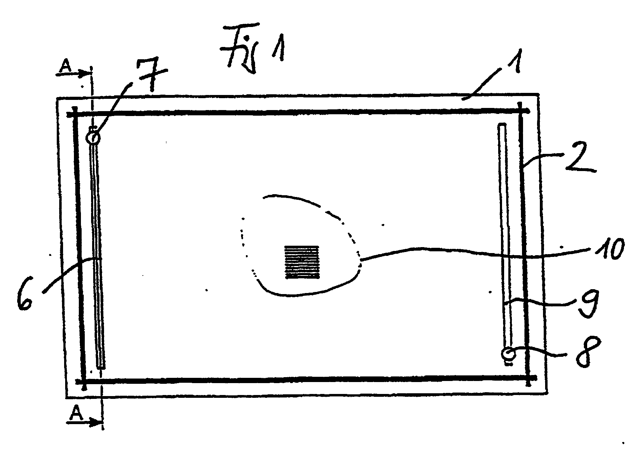

In Figur 1 ist ein Deckblech 1 mit einer umlaufenden, schwarz hervorgehobenen Dichtung 2 dargestellt.

Die Wellenorientierung zeigt ein Ausschnitt 10 in der Mitte des Deckbleches 1. Sie erstreckt sich in dem dargestellten Ausführungsbeispiel in horizontaler Richtung von links nach rechts.

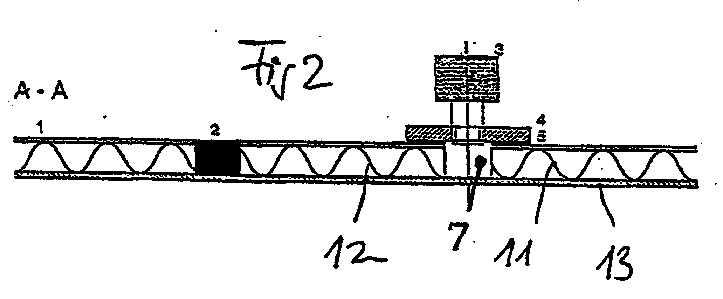

Mit den Bezugszeichen 7, 8 sind Medienzu- bzw. abführungen dargestellt, die aus einem Stutzen 3, einer Profilabdeckung 4 und einer Verklebung 5 bestehen (siehe Figur 2). Die Medienzu- bzw. abführungen 7, 8 leiten über einen Verteilkanal 6 bzw. 9 die Medien in die zwischen den Wellen 11, 12 und den Deckblechen 1, 13 sich ausbildenden Sandwichkanäle. Dies ist in Figur 2 in vergrößerter Darstellung gezeigt.

Für eine einwandfreie Funktion des erfindungsgemäßen Klimatisierungselementes ist es erforderlich, daß in die Sandwichkanäle Strömungshindernisse eingebaut sind, z.B. dadurch, daß sie ungleichmäßig profiliert sind oder Turbulenzschwellen aufweisen. In Figur 1 verlaufen die Sandwichkanäle waagerecht in der Bildebene, während der Verteilkanal 6 senkrecht hierzu angeordnet sind. Die Verteilkanäle 6, 9 werden vorzugsweise in die Sandwichplatte eingefräst.

Das erfindungsgemäß integrierte Klimatisierungselement kann als Strahlungsdecke, z.B. als Kühldecke, als Strahlungsboden, z.B. in Form einer Fußbodenheizung, oder als Strahlungswand, z.B. in kombinierter Ausführung als Heizung und Kühlung, eingesetzt werden. Typische Anwendungsgebiete sind klimatisierte Gebäude, Container oder Verkehrsmittel aller Art.

## Patentansprüche

1. Klimatisierungselement mit Kanälen durch die gasförmige oder flüssige Medien zum Kühlen oder Heizen geleitet werden,
**dadurch gekennzeichnet, dass** das Klimatisierungselement als voll-metallisches Sandwich mit einem leichten Kern aus gewelltem Aluminium und Deckschichten aus glattem Aluminiumband aufgebaut ist, wobei die zwischen dem gewellten Aluminium und den Deckschichten sich ausbildenden Medienführungen untereinander über gemeinsame Kanäle verbunden sind und die Medienführungen Strömungshindernisse aufweisen.

2. Klimatisierungselement nach Anspruch 1,
**dadurch gekennzeichnet,**
**daß** zum Anschluß der Medienführungen mit einem Heiz- oder Kühlaggregat ein Stutzen (3) über eine Profilabdeckung (4) mit dem Deckblech (1) verklebt ist.

3. Klimatisierungselement nach einem der vorhergehenden Ansprüche,
**dadurch gekennzeichnet,**
**daß** einzelne Sektoren, insbesondere Randbereiche des Sandwichmaterials über eine Dichtung (2) von den gasförmigen oder flüssigen Medien abgeschirmt sind.

4. Klimatisierungselement nach Anspruch 3,
**dadurch gekennzeichnet,**
**daß** die Dichtung (2) zwischen den Deckblechen (1, 13) angeordnet ist.

5. Klimatisierungselement nach Anspruch 3 oder 4,
**dadurch gekennzeichnet,**
**daß** die Dichtung (2) als Vollprofil mit einem dem Abstand zwischen den Deckblechen entsprechenden Querschnitt ausgebildet ist.

6. Klimatisierungselement nach einem der vorhergehenden Ansprüche,
**dadurch gekennzeichnet,**
**daß** der Anschluß der Medienführungen an den Stutzen (3) im Bereich eines Kanals (6, 9) erfolgt.

7. Klimatisierungselement nach einem der vorhergehenden Ansprüche,
**dadurch gekennzeichnet,**
**daß** jeder Kanal (6, 9) quer zu den Rippen des aus gewelltem Aluminium bestehenden Kerns verläuft.

8. Klimatisierungselement nach einem der vorhergehenden Ansprüche,
**dadurch gekennzeichnet,**
**daß** die Kanäle (6, 9) innerhalb der von einer umlaufenden Dichtung (2) begrenzten klimatisierten Zone (Z) enden.

9. Klimatisierungselement nach einem der vorhergehenden Ansprüche,
**dadurch gekennzeichnet,**
**daß** die klimatisierte Zone (Z) einen Anteil von 90 - 95 % der Gesamtfläche des Klimatisierungselementes einnimmt.

10. Verfahren zur Herstellung eines Klimatisierungselementes gemäß eines der Ansprüche 1 - 9,
**dadurch gekennzeichnet,**
**daß** ein Stapel aus zwei Deckschichten und einem dazwischen angeordneten Kern aus gewelltem Aluminium durch Heißwalzen miteinander verbunden werden, wobei in die Verbindungsbereiche zuvor Klebstoffe, Lacke oder andere Haftvermittler eingebracht wurden,
**daß** nach Abkühlung des Stapels senkrecht zum Verlauf der Wellen je ein Kanal eingefräst wird und
**daß** die offenen Kanalabschnitte durch Metallstreifen verschlossen werden.

11. Verwendung eines Klimatisierungselementes nach einem der vorhergehenden Ansprüche als Konstruktionselement für tragende Wände, als Innenhaut für Fahrzeuge und als Behältermaterial für temperaturempfindliches Lagergut.

## Claims

1. An air-conditioning element with channels, through which gaseous or liquid mediums are conveyed for cooling or heating purposes, **characterized in that** the air-conditioning element is realized in the form of a fully metallic sandwich structure comprising a light-weight core of corrugated aluminum and cover layers of a flat aluminum band, wherein the medium ducts formed between the corrugated aluminum and the cover layers are interconnected by means of common channels, and wherein the medium ducts contain flow barriers.

2. The air-conditioning element according to Claim 1, **characterized in that** a connecting piece (3) is bonded to the cover sheet (1) by means of a profile covering (4) in order to connect the medium ducts to a heating or cooling unit.

3. The air-conditioning element according to one of the preceding claims, **characterized in that** individual sectors, in particular, border areas of the sandwich structure, are shielded from the gaseous or liquid mediums by means of a seal (2).

4. The air-conditioning element according to Claim 3, **characterized in that** the seal (2) is arranged between the cover sheets (1, 13).

5. The air-conditioning element according to Claim 3 or 4, **characterized in that** the seal (2) is realized in the form of a solid profile with a cross section that corresponds to the distance between the cover sheets.

6. The air-conditioning element according to one of the preceding claims, **characterized in that** the connection between the medium ducts and the connecting piece (3) takes place in the region of a channel (6, 9).

7. The air-conditioning element according to one of the preceding claims, **characterized in that** each channel (6, 9) extends transverse to the ribs of the core of corrugated aluminum.

8. The air-conditioning element according to one of the preceding claims, **characterized in that** the channels (6, 9) end within the air-conditioned zone (Z) that is limited by a peripheral seal (2).

9. The air-conditioning element according to one of the preceding claims, **characterized in that** the air-conditioned zone (Z) occupies 90-95 % of the total surface of the air-conditioning element.

10. A method for manufacturing an air-conditioning element according to one of Claims 1-9, **characterized in that** two cover sheets and a core of corrugated aluminum arranged in between are connected to one another by means of hot-rolling, wherein adhesives, lacquers or other bonding agents were previously introduced into the connecting regions, **in that** one respective channel is milled perpendicular to the direction of the corrugations after the sandwich structure has cooled, and **in that** the open channel sections are closed with metal strips.

11. The utilization of an air-conditioning element according to one of the preceding claims as a construction element for load-bearing walls, as an inside plating for motor vehicles and as a material for containers, in which temperature-sensitive products are stored.

## Revendications

1. Elément de climatisation avec des cannaux à travers lesquels sont conduits des fluides gazeux ou liquides destinés au refroidissement ou au chauffage, **caractérisé en ce que** l'élément de climatisation est constitué par un sandwich entièrement métallique composé d'une âme légère en aluminium ondulé et de couches de recouvrement en bande d'aluminium lisse, dans lequel les conduites de fluide se formant entre l'aluminium ondulé et les couches de recouvrement sont reliés entre eux par des canaux communs et les conduites de fluide montrent des obstacles à l'écoulement.

2. Elément de climatisation selon la revendication 1, **caractérisé en ce que**, pour le raccordement des conduites de fluide à un groupe de chauffage ou de refroidissement, un manchon (3) est collé à la tôle des recouvrement (1) par l'intermédiaire d'une couverture du profil(4).

3. Elément de climatisation selon l'une quelconque des revendications précédentes, **caractérisé en ce que** certaines zones, en particulier des régions de bord du matériau sandwich, sont isolées des fluides gazeux ou liquides par une garniture d'étanchéité (2).

4. Elément de climatisation selon la revendication 3, **caractérisé en ce que** la garniture d'étanchéité (2) est disposée entre les tôles de recouvrement (1, 13).

5. Elément de climatisation selon la revendication 3 ou 4, **caractérisé en ce que** la garniture d'étanchéité (2) a la forme d'un profil plein avec une section transversale correspondant à la distance entre les tôles de recouvrement.

6. Elément de climatisation selon l'une quelconque des revendications précédentes, **caractérisé en ce que** le raccordement des conduites de fluide au manchon (3) est effectué dans la région d'un canal (6, 9).

7. Elément de climatisation selon l'une quelconque des revendications précédentes, **caractérisé en ce que** chaque canal (6, 9) est orienté transversalement aux nervures de l'âme composée d'aluminium ondulé.

8. Elément de climatisation selon l'une quelconque des revendications précédentes, **caractérisé en ce que** les canaux (6, 9) se terminent à l'intérieur de la zone climatisée (Z) limitée par une garniture d'étanchéité périphérique (2).

9. Elément de climatisation selon l'une quelconque des revendications précédentes, **caractérisé en ce que** la zone climatisée (Z) occupe une portion de 90 - 95 % de la surface totale de l'élément de climatisation.

10. Procédé pour la fabrication d'un élément de climatisation l'une quelconque des revendications 1 - 9, **caractérisé en ce que** l'on assemble l'une à l'autre deux tôles de recouvrement et une âme en aluminium ondulé disposée entre elles en un empilement par laminage à chaud, dans lequel on introduit au préalable dans les régions d'assemblage des colles, des laques ou d'autres agents adhésifs, **en ce qu'**après le refroidissement de l'empilement, on fraise un canal perpendiculaire au sens des ondulations, et **en ce que** l'on ferme les parties ouvertes du canal au moyen de bandes de métal.

11. Utilisation d'un élément de climatisation selon quelconque des revendications précédentes comme élément de construction pour des parois portants, comme habillage intérieur de véhicules et comme matériau de récipient pour le stockage de marchandises sensibles à la température.
